# EUROPÄISCHE PATENTSCHRIFT

(11) **EP 1 699 203 B1**
(45) Veröffentlichungstag und Bekanntmachung des Hinweises auf die Patenterteilung: **21.11.2018**
(21) Anmeldenummer: 05026356.5
(22) Anmeldetag: 02.12.2005
(51) Int. Cl.: H04L 29/08, H04L 29/06, G05B 19/414

(54) **MODULARES NUMERISCHES STEUERGERÄT**
MODULAR NUMERICAL CONTROL DEVICE
APPAREIL DE CONTRÔLE NUMÉRIQUE MODULAIRE

(30) Priorität: 03.03.2005 DE 102005009707
(43) Veröffentlichungstag der Anmeldung: 06.09.2006
(73) Patentinhaber: Dr. Johannes Heidenhain GmbH, 83301 Traunreut (DE)
(72) Erfinder: Zehentner, Georg, 83317 Teisendorf (DE)

(56) Entgegenhaltungen:
- WO-A-00/79352
- DE-A1- 19 840 562
- US-A- 5 274 311

## Beschreibung

Die Erfindung betrifft ein modulares numerisches Steuergerät nach Anspruch 1. In einem derartigen modularen numerischen Steuergerät können sicherheitsrelevante Informationen zuverlässig über serielle Schnittstellen übertragen werden.

Numerische Steuergeräte (numerical control; NC) werden vorwiegend zur Steuerung von Werkzeugmaschinen eingesetzt und können im wesentlichen in zwei Funktionseinheiten unterteilt werden, einem Hauptrechner und wenigstens einer Reglereinheit.

Der Hauptrechner stellt die zur Bedienung der NC notwendigen Benutzerschnittstellen wie Tastatur und Monitor zur Verfügung und dient zur Erstellung, Speicherung und Abarbeitung von Programmen. In den Reglereinheiten befinden sich Regelkreise, die zur Ansteuerung von Umrichtermodulen dienen, die wiederum Motoren ansteuern. Außerdem umfassen die Reglereinheiten digitale und/oder analoge Schnittstellen zur Erfassung von Istwerten, die während eines Programmlaufs kontinuierlich zur Steuerung der Regelkreise benötigt werden. Bei den zu erfassenden Istwerten kann es sich beispielsweise um Positionswerte (Lagewerte), Geschwindigkeitswerte, Beschleunigungswerte oder auch Stromwerte handeln. Ebenso wie der Hauptrechner sind auch die Reglereinheiten mikroprozessorgesteuert.

Häufig besteht der Wunsch, Hauptrechner und Reglereinheiten räumlich getrennt anzuordnen. So ist es sinnvoll, den Hauptrechner zusammen mit der Tastatur und dem Monitor in einem Gehäuse zusammenzufassen, um eine Benutzerschnittstelle zu schaffen, die nach ergonomischen Gesichtspunkten für den Anwender optimal platzierbar ist. Ebenso ist es wünschenswert, die Reglereinheiten nahe an den Umrichtern anzuordnen, um eine optimale Signalqualität der pulsbreitenmodulierten Steuersignale zu gewährleisten.

Für die Datenübertragung zwischen räumlich getrennten Einheiten bieten sich serielle Schnittstellen an, da hier Kabel mit nur wenigen Adern eingesetzt werden können, die im Vergleich zu Kabeln für die Datenübertragung über parallele Schnittstellen sehr preisgünstig und einfach handhabbar sind.

Als problematisch ist in einer solchen Systemarchitektur die Übertragung von sicherheitsrelevanten Informationen anzusehen, da die mikroprozessorgesteuerten Einheiten bestimmen, welche Daten über die serielle Schnittstelle übertragen werden. Deshalb kann es bei einer Fehlfunktion einer mikroprozessorgesteuerten Einheit, hervorgerufen beispielsweise durch einen Programmabsturz oder durch äußere Einflüsse (z.B. Schwankungen der Betriebsspannung, Überhitzung von Modulen), passieren, dass sicherheitsrelevante Informationen nicht übertragen werden. Besonders im Falle einer sicherheitsbedingten Notabschaltung kann das gefährliche Folgen haben, die von materiellen Schäden an der Werkzeugmaschine bis hin zur Gefährdung von Leib und Leben des Bedienpersonals reichen.

Die US 5,274,311 beschreibt ein modulares Motorsteuerungssystem, bestehend aus einem Motorsteuermodul, einem Ein-/Ausgabemodul und einem Prozessormodul, die über eine differentielle Zweidraht-Schnittstelle miteinander kommunizieren. Zur sicheren Übertragung eines Abschaltsignals ist eine separate Leitung vorgesehen, die parallel zur Zweidraht-Schnittstelle zu allen Modulen geführt ist. Dadurch wird eine sichere Abschaltung auch bei Ausfall der Datenübertragung über die Zweidraht-Schnittstelle gewährleistet.

Nachteile dieser Lösung sind zum einen, dass eine zusätzliche Leitung benötigt wird, zum anderen, dass über die eine zusätzliche Leitung nur ein dediziertes Signal übertragen werden kann.

Die WO00/79352A2 beschreibt ein sicherheitsbezogenes Automatisierungssystem, bestehend aus mehreren Modulen, die zum Datenaustausch über einen Bus miteinander verbunden sind. Ein Sicherheitsanalysator zum Ausführen von sicherheitsbezogenen Funktionen ist ebenfalls an den Bus angeschlossen. Er hört den Datenfluss über den Bus mit und überprüft und/oder verarbeitet sicherheitsbezogene Daten im Busdatenstrom.

Nachteilig ist hier, dass bei einem Ausfall des Moduls, dass den Datenstrom erzeugt, eine Überprüfung und/oder Verarbeitung von sicherheitsbezogenen Daten nicht mehr möglich ist.

Es ist daher Aufgabe der Erfindung, ein modulares numerisches Steuergerät anzugeben, das eine sichere Übertragung von sicherheitsrelevanten Informationen über serielle Schnittstellen erlaubt, ohne dass dafür zusätzliche Leitungen eingesetzt werden müssen.

Diese Aufgabe wird gelöst durch ein modulares numerisches Steuergerät nach Anspruch 1. Vorteilhafte Details des modularen numerischen Steuergeräts ergeben sich aus den von Anspruch 1 abhängigen Ansprüchen.

Es wird nun ein modulares numerisches Steuergerät vorgeschlagen, das aus wenigstens zwei Modulen besteht, die je eine Mikroprozessoreinheit enthalten und über serielle Datenübertragungskanäle zur Übertragung von Informationen in Form von Datenpaketen miteinander verbunden sind. In wenigstens einem Modul ist eine Datenpaket-Erzeugungseinheit zur Erzeugung von Datenpaketen und zur Übertragung von Datenpaketen zu wenigstens einem weiteren Modul vorgesehen. Dabei arbeitet die Datenpaket-Erzeugungseinheit unabhängig von der Funktion der Mikroprozessoreinheit. Darüber hinaus ist in wenigstens einem Modul eine Datenpaket-Verarbeitungseinheit vorgesehen, mit der, ebenfalls unabhängig von der Funktion der Mikroprozessoreinheit, Datenpakete verarbeitbar und/oder zu wenigstens einem weiteren Modul übertragbar sind. Die Datenpakete enthalten den Status von wenigstens einem Sicherheitssignal.

Weitere Vorteile sowie Einzelheiten der vorliegenden Erfindung ergeben sich aus der nachfolgenden Beschreibung anhand der Figuren. Dabei zeigt
Figur 1 ein Blockschaltbild eines erfindungsgemäßen modularen numerischen Steuergeräts,
Figur 2 ein Blockschaltbild einer weiteren Ausführungsform eines erfindungsgemäßen modularen numerischen Steuergeräts,
Figur 3 ein Blockschaltbild einer bevorzugten Ausführungsform eines erfindungsgemäßen modularen numerischen Steuergeräts
Figur 4 ein Blockschaltbild einer vierten Ausführungsform eines erfindungsgemäßen modularen numerischen Steuergeräts

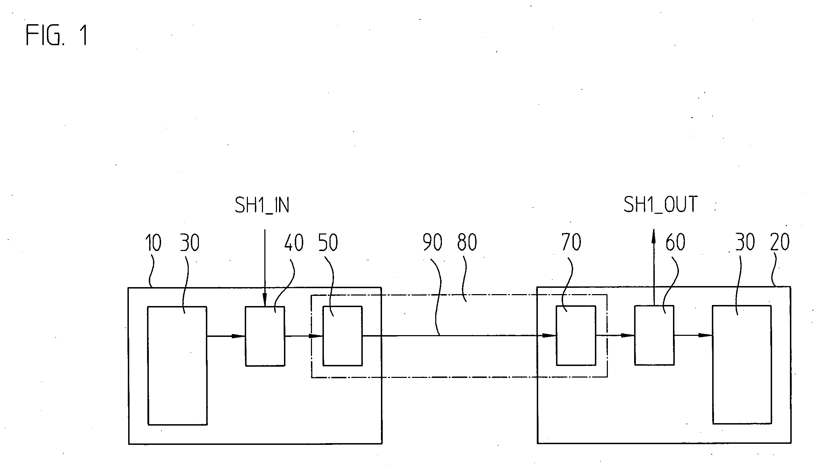

Figur 1 zeigt ein erfindungsgemäßes modulares numerisches Steuergerät. Es besteht aus zwei Modulen, einem Hauptrechner 10 und einer Reglereinheit 20. Beide Module enthalten je eine Mikroprozessoreinheit 30. Der Hauptrechner 10 enthält weiter eine Datenpaket-Erzeugungseinheit 40, dem ein Sicherheitssignal SH1_IN zugeführt ist, und eine Hauptsendeeinheit 50. In der Reglereinheit 20 befindet sich eine Datenpaket-Verarbeitungseinheit 60, die ein Abschaltsignal SH1_OUT ausgibt, und eine erste Empfängereinheit 70. Hauptrechner 10 und Reglereinheit 20 sind über einen seriellen Datenübertragungskanal 80 verbunden, der sich aus der Hauptsendeeinheit 50 und der ersten Empfängereinheit 70 zusammensetzt, mit deren Hilfe über einen Sendekanal 90 eine unidirektionale Datenübertragung vom Hauptrechner 10 zur Reglereinheit 20 möglich ist.

Da die Art und der Aufbau der Mikroprozessoreinheiten 30 beliebig sein kann, sind sie im Hauptrechner 10 und in der Reglereinheit 20 mit dem gleichen Bezugszeichen versehen. Es sei aber ausdrücklich darauf hingewiesen, dass sich die Mikroprozessoreinheit 30 im Hauptrechner 10 durchaus von der Mikroprozessoreinheit 30 in der Reglereinheit 20 unterscheiden kann. So kann es sich bei der Mikroprozessoreinheit 30 im Hauptrechner 10 beispielsweise um einen Personal Computer (PC) handeln, der dazu geeignet ist, Befehle über ein Eingabegerät (Tastatur, Maus) zu empfangen und zu verarbeiten, Informationen auf einem Monitor anzuzeigen und Daten auf Speichermedien zu verwalten. Die Mikroprozessoreinheit 30 in der Reglereinheit 20 kann dagegen von einem Signalprozessor gesteuert sein und Regelkreise, sowie Schnittstellen zum Erfassen von Istwerten (Positionswerten, Stromwerten, ...) und zur Ansteuerung von Umrichtermodulen, die wiederum Antriebsachsen ansteuern, enthalten.

Während der Abarbeitung eines Programms, etwa zur Bearbeitung eines Werkstückes durch eine Werkzeugmaschine, die vom modularen numerischen Steuergerät gesteuert wird, überträgt der Hauptrechner 10 in äquidistanten Zeitabständen Daten, z.B. Sollwerte, zur Reglereinheit 20. Dabei werden die zu übertragenden Daten von der Mikroprozessoreinheit 30 im Hauptrechner 10 der Datenpaket-Erzeugungseinheit 40 zugeführt. Diese bildet in äquidistanten Zeitabständen aus den zu übertragenden Daten und dem Status des Sicherheitssignals SH1_IN ein Datenpaket und überträgt dieses über den seriellen Datenübertragungskanal 80 zur Datenpaket-Verarbeitungseinheit 60 in der Reglereinheit 20. Die Datenpaket-Verarbeitungseinheit 60 leitet die im Datenpaket enthaltenen Daten an die Mikroprozessoreinheit 30 der Reglereinheit 20 weiter und schaltet in Abhängigkeit vom Status des Sicherheitssignals SH1_IN das Abschaltsignal SH1_OUT ein oder aus.

Das Bilden der Datenpakete in der Datenpaket-Erzeugungseinheit 40 im Hauptrechner 10, die Übertragung der Datenpakete über den seriellen Datenübertragungskanal 80 und die anschließende Auswertung der Datenpakete, insbesondere des Status des Sicherheitssignals SH1_IN, in der Datenpaket-Verarbeitungseinheit 60 ist dabei unabhängig von den Mikroprozessoreinheiten 30. Das bedeutet zum einen, dass auch bei Ausfall der Mikroprozessoreinheit 30 im Hauptrechner 10 weiter Datenpakete gebildet und übertragen werden, zum anderen, dass auch bei Ausfall der Mikroprozessoreinheit 30 in der Reglereinheit 20 bei Empfang eines Datenpakets der Status des Sicherheitssignals SH1_IN überprüft wird und gegebenenfalls über das Abschaltsignal SH1_OUT eine Sicherheitsabschaltung initiiert wird. Es hat sich als besonders vorteilhaft erwiesen, die Datenpaket-Erzeugungseinheit 40 und auch die Datenpaket-Verarbeitungseinheit 60 als digitale zustandsgesteuerte Automaten (State Machines) mit eigener, unabhängiger Zeitbasis auszuführen. Eine derartige Schaltung kann beispielsweise in einem programmierbaren Logikbaustein, insbesondere in einem FPGA integriert werden.

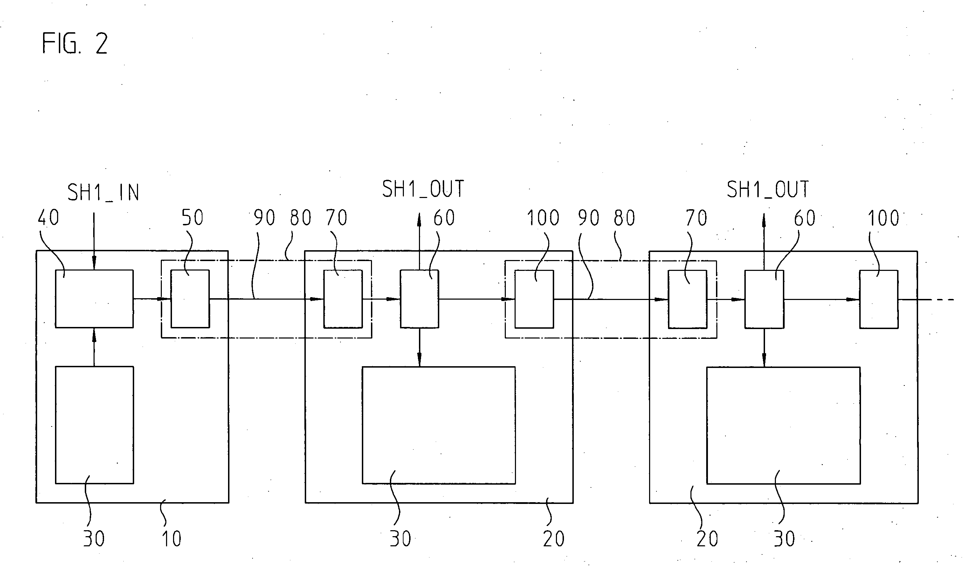

Figur 2 zeigt ein Blockschaltbild einer weiteren Ausführungsform eines erfindungsgemäßen modularen numerischen Steuergeräts. Es besteht aus einem Hauptrechner 10 und zwei Reglereinheiten 20, die mittels serieller Datenübertragungskanäle 80 in Form einer Reihenschaltung miteinander verbunden sind. Im Vergleich zu Figur 1 enthalten die Reglereinheiten 20 zusätzlich eine erste Sendeeinheit 100, die zusammen mit dem Sendekanal 90 und der ersten Empfängereinheit 70 der nachfolgenden Reglereinheit 20 der Reihenschaltung den seriellen Datenübertragungskanal 80 bilden. Der serielle Datenübertragungskanal 80, der den Hauptrechner 10 mit der ersten Reglereinheit 20 der Reihenschaltung verbindet, setzt sich, wie in Figur 1, aus der Hauptsendeeinheit 50, dem Sendekanal 90 und der ersten Empfängereinheit 70 der ersten Reglereinheit 20 der Reihenschaltung zusammen. Die Datenpaket-Verarbeitungseinheit 60 in dieser Ausführungsform ist so ausgebildet, dass sie erstens den Status des Sicherheitssignals SH1_IN auswertet und gegebenenfalls über das Abschaltsignal SH1_OUT eine Notabschaltung initiiert, zweitens im Datenpaket enthaltene Daten der Mikroprozessoreinheit 30 zuführt und drittens eintreffende Datenpakete zur ersten Sendeeinheit 100 weiterleitet, die sie zur nachfolgenden Reglereinheit 20 der Reihenschaltung überträgt.

Auf diese Weise wird der Status des Sicherheitssignals SH1_IN, ausgehend vom Hauptrechner 10, sequentiell zu allen Reglereinheiten 20 der Reihenschaltung übertragen. Da sowohl die Datenpaket-Erzeugungseinheit 40, als auch die Datenpaket-Verarbeitungseinheit 60 unabhängig von den Mikroprozessoreinheiten 30 arbeiten, ist sichergestellt, dass der Status des Sicherheitssignals SH1_IN auch bei Ausfall von einer oder mehreren Mikroprozessoreinheiten 30 übertragen wird.

Wie durch die gestrichelte Linie am Ausgang der ersten Sendeeinheit 100 der zweiten Reglereinheit 20 der Reihenschaltung angedeutet, kann die Ausführungsform in Figur 2 um eine Vielzahl von weiteren Reglereinheiten 20 erweitert werden.

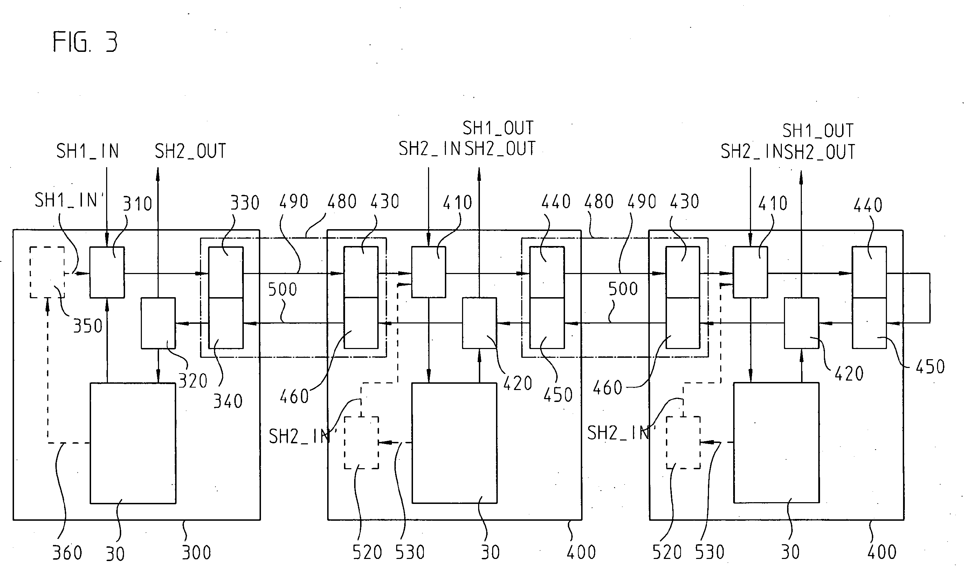

Figur 3 zeigt schließlich eine bevorzugte Ausführungsform eines erfindungsgemäßen modularen numerischen Steuergeräts. Es besteht aus einem Hauptrechner 300 und zwei Reglereinheiten 400, die, ausgehend vom Hauptrechner 300, in Form einer Reihenschaltung miteinander verbunden sind.

Der Hauptrechner 300 enthält neben der Mikroprozessoreinheit 30 eine Datenpaket-Erzeugungseinheit 310, eine abschließende Datenpaket-Verarbeitungseinheit 320, sowie eine Hauptsendeeinheit 330 und eine Hauptempfängereinheit 340. Der Datenpaket-Erzeugungseinheit 310 ist, wie in den vorhergehenden Beispielen, ein Sicherheitssignal SH1_IN zugeführt. Dagegen gibt die abschließende Datenpaket-Verarbeitungseinheit 320 ein Abschaltsignal SH2_OUT aus.

Die Reglereinheiten 400 bestehen aus einer ersten Datenpaket-Verarbeitungseinheit 410, einer zweiten Datenpaket-Verarbeitungseinheit 420, einer ersten Empfängereinheit 430, einer ersten Sendeeinheit 440, einer zweiten Empfängereinheit 450 und einer zweiten Sendeeinheit 460. Außerdem befindet sich in jeder Reglereinheit 400 eine Mikroprozessoreinheit 30. Der ersten Datenpaket-Verarbeitungseinheit 410 ist ein Sicherheitssignal SH2_IN zugeführt, während die zweite Datenpaket-Verarbeitungseinheit 420 zwei Abschaltsignale SH1_OUT und SH2_OUT ausgibt.

Die seriellen Datenübertragungskanäle 480, über die der Hauptrechner 300 mit der ersten Reglereinheit 400 der Reihenschaltung, bzw. die Reglereinheiten 400 untereinander verbunden sind, sind in diesem bevorzugten Ausführungsbeispiel bidirektional ausgelegt. So besteht der serielle Datenübertragungskanal 480, der den Hauptrechner 300 mit der ersten Reglereinheit 400 der Reihenschaltung verbindet, aus der Hauptsendeeinheit 330, die über einen Sendekanal 490 Datenpakete zur ersten Empfängereinheit 430 sendet und aus der Hauptempfängereinheit 340, die über einen Empfangskanal 500 Datenpakete von der zweiten Sendeeinheit 460 empfängt. Analog dazu besteht der serielle Datenübertragungskanal 480, der die Reglereinheiten 400 untereinander verbindet, aus der ersten Sendeeinheit 440, die über den Sendekanal 490 Datenpakete zur ersten Empfängereinheit 430 der nachfolgenden Reglereinheit 400 der Reihenschaltung sendet und der zweiten Empfängereinheit 450, die Datenpakete über den Empfangskanal 500 von der zweiten Sendeeinheit 460 der nachfolgenden Reglereinheit 400 der Reihenschaltung empfängt.

Eine weit verbreitete serielle Datenschnittstelle, die zur Bildung der seriellen Datenübertragungskanäle 480 besonders geeignet ist, ist vor allem aus dem Bereich der Local Area Networks (LAN) bekannt und trägt die Bezeichnung FAST ETHERNET (Norm IEEE Std. 802.3-2002). Das Datenübertragungsverfahren, wie es im Standard IEEE 802.3 beschrieben ist, ist für zeitkritische Anwendungen zwar nur bedingt geeignet, da es vorwiegend für die Bürotechnik zur Übertragung großer Datenmengen entwickelt wurde und dadurch kein determiniertes Zeitverhalten aufweist. Auf der Basis der physikalischen Ebene des Standards IEEE 802.3 (Layer 1 des OSI/ISO Schichtenmodells) kann jedoch ein echtzeitfähiges Datenübertragungssystem aufgebaut werden. Das hat insbesondere den Vorteil, dass auf eine bewährte Technik zurückgegriffen werden kann, zu der auf dem Markt eine große Anzahl von Bauteilen zu einem günstigen Preis zur Verfügung stehen.

Die Datenpaket-Erzeugungseinheit 310 im Hauptrechner 300 ist so ausgebildet, dass sie während der Abarbeitung eines Programms in determinierten, mit Vorteil äquidistanten Zeitabständen aus Daten, die ihr von der Mikroprozessoreinheit 30 übermittelt werden, und dem Status des Sicherheitssignals SH1_IN, Datenpakete bildet und über den seriellen Datenübertragungskanal 480 zur ersten Reglereinheit 400 der Reihenschaltung sendet. Abweichend zu den vorhergehenden Ausführungsbeispielen enthalten die Daten, die die Mikroprozessoreinheit 30 der Datenpaket-Erzeugungseinheit 310 übermittelt, auch noch die Information, ob es sich um einen schreibenden oder/und lesenden Zugriff handelt. Die Bildung und Übertragung der Datenpakete erfolgt, wie bei den vorhergehenden Ausführungsbeispielen, unabhängig von der Mikroprozessoreinheit 30. Treffen aufgrund einer Fehlfunktion keine Daten von der Mikroprozessoreinheit 30 bei der Datenpaket-Erzeugungseinheit 310 ein, so bildet die Datenpaket-Erzeugungseinheit 310 Datenpakete, in denen der Bereich, der zur Aufnahme der zu übertragenden Daten vorgesehen ist, leer ist, oder die überhaupt keinen derartigen Bereich aufweisen. In der Reglereinheit 400 werden in der ersten Datenpaket-Verarbeitungseinheit 410 die in einem empfangenen Datenpaket enthaltenen Daten ausgelesen und an die Mikroprozessoreinheit 30 weitergeleitet. Außerdem fügt die erste Datenpaket-Verarbeitungseinheit 410 den Status des Sicherheitssignals SH2_IN in das Datenpaket ein und sendet es weiter zur nächsten Reglereinheit 400 der Reihenschaltung.

Bei der letzten Reglereinheit 400 der Reihenschaltung ist der Sendekanal 490 mit dem Empfangskanal 500 verbunden, d.h. Datenpakete, die von der ersten Sendeeinheit 440 gesendet werden, werden in umgekehrter Richtung zurückgeschickt und erreichen über die zweite Empfängereinheit 450 die zweite Datenpaket-Verarbeitungseinheit 420 der Reglereinheit 400. Diese wertet den Status der Sicherheitssignale SH1_IN und SH2_IN aus und schaltet die Abschaltsignale SH1_OUT und SH2_OUT in Abhängigkeit vom Status der Sicherheitssignale SH1_IN und SH2_IN ein oder aus. Weiterhin fügt die zweite Datenpaket-Verarbeitungseinheit 420 bei einem lesenden Zugriff Daten, die ihr von der Mikroprozessoreinheit 30 zugeführt werden, in das Datenpaket ein und leitet es über den seriellen Datenübertragungskanal 480 zur nächsten Reglereinheit 400 in Richtung Hauptrechner 300 weiter. An dieser Stelle sei noch einmal darauf hingewiesen, dass die Weiterleitung des Datenpakets unabhängig von der Funktion der Mikroprozessoreinheit 30 funktioniert, d.h. auch wenn die Mikroprozessoreinheit 30 keine Daten zur zweiten Datenpaket-Verarbeitungseinheit 420 übermittelt, wird das Datenpaket weitergeleitet.

Schließlich erreicht das Datenpaket die abschließende Datenpaket-Verarbeitungseinheit 320 im Hauptrechner 300. Diese übermittelt die im Datenpaket enthaltenen, gegebenenfalls von den Reglereinheiten 400 modifizierten Daten zur weiteren Verarbeitung zur Mikroprozessoreinheit 30. Für den Fall, dass auch am Hauptrechner 30 sicherheitsrelevante Einheiten angeschlossen sind, wertet die abschließende Datenpaket-Verarbeitungseinheit 320 den Status des Sicherheitssignals SH2_IN aus und schaltet in Abhängigkeit davon das Abschaltsignal SH2_OUT ein oder aus.

In diesem bevorzugten Ausführungsbeispiel ist der Zusammenhang zwischen den Sicherheitssignalen SH1_IN, SH2_IN und den Abschaltsignalen SH1_OUT, SH2_OUT wie folgt geregelt:
Der Status des Sicherheitssignals SH1_IN bestimmt direkt den Zustand des Abschaltsignals SH1_OUT, d.h. signalisiert der Status von SH1_IN einen Fehler, dann wird in jeder Reglereinheit 400 das Abschaltsignal SH1_OUT aktiv geschaltet.

Der Status aller Sicherheitssignale SH2_IN ist ODER-verknüpft, d.h. sobald das Sicherheitssignal SH2_IN von einer Reglereinheit 400 einen Fehler anzeigt, werden alle Abschaltsignale SH2_OUT aktiv geschaltet.

Wie der Fachmann erkennt, kann der Zusammenhang zwischen den Sicherheitssignalen SH1_IN, SH2_IN und den Abschaltsignalen SH1_OUT, SH2_OUT auch völlig anders geregelt sein. So könnte z.B. das Sicherheitssignal SH1_IN nur ein Abschalten der Antriebe einer bestimmten Reglereinheit 400 bewirken. Gleiches gilt für die Anzahl der Sicherheitssignale und Abschaltsignale. So könnte eine beliebige Anzahl von Sicherheitssignalen zur Abschaltung aller von der modularen numerischen Steuerung gesteuerten Module über eine einzelnes Abschaltsignal führen.

Neben, oder anstatt der Sicherheitssignale SH1_IN, SH2_IN, können auch interne Sicherheitssignale erzeugt werden. So ist im Hauptrechner 300 mit gestrichelten Linien eine Hauptrechner-Überwachungseinheit 350 eingezeichnet, über deren Ausgang ein internes Sicherheitssignal SH1_IN' an die Datenpaket-Erzeugungseinheit 310 gelangt. Analog dazu ist in den Reglereinheiten 400 eine Regler-Überwachungseinheit 520 vorgesehen, über deren Ausgang ein internes Sicherheitssignal SH2_IN' der ersten Datenpaket-Verarbeitungseinheit 410 zugeführt ist.

Derartige Überwachungseinheiten sind im Stand der Technik als Watchdog-Schaltungen bekannt. Ihre Funktion entspricht im Wesentlichen der eines retriggerbaren Monoflops. Solange die Schaltung regelmäßig innerhalb ihrer eingestellten Umschaltzeit durch einen Triggerimpuls zurückgesetzt wird, bleibt der Pegel an ihrem Ausgang gleich. Wird diese definierte Zeitdauer verletzt, d.h. überschreitet die Zeit zwischen zwei Triggerimpulsen die eingestellte Umschaltzeit, ändert sich der Pegel am Ausgang der Schaltung. In der Praxis kann eine Watchdog-Schaltung beispielsweise mit einem freilaufenden Zähler mit Überlauf-Ausgang realisiert werden, der durch einen Triggerimpuls rücksetzbar ist. Bleibt der Triggerimpuls aus, kommt es zu einem Überlauf des Zählers und der Pegel am Überlauf-Ausgang ändert sich.

Im Beispiel in Figur 3 erhält die Hauptrechner-Überwachungseinheit 350 die Triggerimpulse über eine Triggerleitung 360 von der Mikroprozessoreinheit 30 des Hauptrechners 300. Um zu verhindern, dass die Hauptrechner-Überwachungseinheit 350 den Status des internen Sicherheitssignals SH1_IN' ändert, muss das Programm, das im Hauptrechner 300 abgearbeitet wird, so geschrieben sein, dass stets innerhalb der eingestellten Umschaltzeit der Hauptrechner-Überwachungseinheit 350 durch einen Programmbefehl ein Triggerimpuls generiert wird. Bei einer Fehlfunktion, wenn der Programmbefehl zum Erzeugen des Triggerimpulses, etwa hervorgerufen durch einen Programmabsturz, nicht mehr oder zu spät ausgeführt wird, bleibt der Triggerimpuls aus. Dadurch wird die definierte Zeitdauer überschritten und das interne Sicherheitssignal SH1_IN' ändert seinen Pegel.

Das gleiche gilt für die Regler-Überwachungseinheit 520. Sie erhält über die Triggerleitung 530 ihren Triggerimpuls von der Mikroprozessoreinheit 30 der Reglereinheit 400. Das Ausbleiben des Triggerimpulses wird hier durch den Pegel des internen Sicherheitssignals SH2_IN' signalisiert.

Da die Bildung und das Senden von Datenpaketen, die den Status der internen Sicherheitssignale SH1_IN' und SH2_IN' enthalten, wie oben beschrieben, unabhängig von der Funktion der Mikroprozessoreinheiten 30 erfolgt, ist damit gewährleistet, dass bei einer Fehlfunktion einer Mikroprozessoreinheit 30 eine Notabschaltung aller mit der modularen numerischen Steuerung verbundenen Antriebe initiiert werden kann.

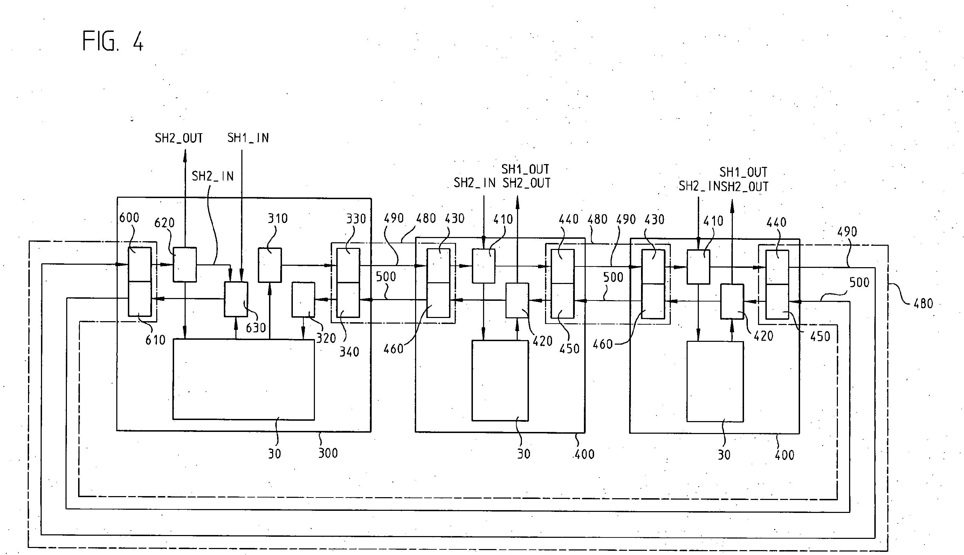

Figur 4 zeigt schließlich ein Blockschaltbild einer vierten Ausführungsform eines erfindungsgemäßen modularen numerischen Steuergeräts. Aus Gründen der Übersichtlichkeit wurde in Figur 4 auf die Darstellung der Überwachungseinheiten zur Erzeugung der internen Sicherheitssignale, wie sie anhand von Figur 3 beschrieben wurden, verzichtet.

Abweichend zum in Figur 3 dargestellten Beispiel umfasst der Hauptrechner 300 in Figur 4 zusätzlich eine zweite Hauptempfängereinheit 600, eine zweite Hauptsendeeinheit 610, sowie eine zweite abschließende Datenpaket-Verarbeitungseinheit 620 und eine zweite Datenpaket-Erzeugungseinheit 630.

Die zweite Hauptempfängereinheit 600 ist über einen Sendekanal 490 mit der ersten Sendeeinheit 440 der abschließenden Reglereinheit 400 der Reihenschaltung verbunden, die zweite Hauptsendeeinheit 610 über einen Empfangskanal 500 mit der zweiten Empfängereinheit 450 der abschließenden Reglereinheit 400. Somit ist wiederum ein serieller Datenübertragungskanal 480 gebildet, der die abschließende Reglereinheit 400 der Reihenschaltung mit dem Hauptrechner 300 verbindet.

Die zweite abschließende Datenpaket-Verarbeitungseinheit 620 und die zweite Datenpaket-Erzeugungseinheit 630 arbeiten analog zur abschließenden Datenpaket-Verarbeitungseinheit 320 bzw. zur Datenpaket-Erzeugungseinheit 310. Der zweiten Datenpaket-Erzeugungseinheit 630 ist das Sicherheitssignal SH1_IN zugeführt. Sie bildet in determinierten Zeitabständen aus Daten, die ihr von der Mikroprozessoreinheit 30 zugeführt werden und dem Status des Sicherheitssignals SH1_IN Datenpakete und sendet sie über den seriellen Datenübertragungskanal 500 zur abschließenden Reglereinheit 400 der Reihenschaltung. Die zweite abschließende Datenpaket-Verarbeitungseinheit 620 erhält über den seriellen Datenübertragungskanal 490 Datenpakete, verarbeitet sie und schaltet, abhängig vom Status des Sicherheitssignals SH2_IN, das Abschaltsignal SH2_OUT. Die Funktion der zweiten abschließenden Datenpaket-Verarbeitungseinheit 620, sowie der zweiten Datenpaket-Erzeugungseinheit 630 ist wiederum unabhängig von der Funktion der Mikroprozessoreinheit 30.

In den Reglereinheiten 400 ist die erste Datenpaket-Verarbeitungseinheit 410 jeweils so aufgebaut, dass sie den Status des Sicherheitssignals SH2_IN in ankommende Datenpakete einfügt und diese zur nachfolgenden Reglereinheit 400 der Reihenschaltung weiterleitet. Eine Auswertung der Sicherheitssignale SH1_IN und SH2_IN, insbesondere ein Schalten der Abschaltsignale SH1_OUT und SH2_OUT in Abhängigkeit vom Status der Sicherheitssignale SH1_IN und SH2_IN, findet dagegen in den Reglereinheiten 400 nur in der zweiten Datenpaket-Verarbeitungseinheit 420 statt. Aus diesem Grund ist der Datenpaket-Erzeugungseinheit 310, abweichend vom Ausführungsbeispiel in Figur 3, kein Sicherheitssignal zugeführt und die abschließende Datenpaket-Verarbeitungseinheit 320 gibt kein Abschaltsignal aus. Statt dessen füllt die Datenpaket-Erzeugungseinheit 310 die Bereiche in den erzeugten Datenpaketen, die den Status von Sicherheitssignalen aufnehmen sollen, mit Werten, die inaktiven Sicherheitssignalen entsprechen.

Um sicherzustellen, dass der Status des Sicherheitssignals SH2_IN alle Reglereinheiten erreicht, rekonstruiert die zweite Datenpaket-Verarbeitungseinheit 620 aus dem in eintreffenden Datenpaketen enthaltenen Status des Sicherheitssignals SH2_IN das Signal SH2_IN und führt es der zweiten Datenpaket-Erzeugungseinheit 630 zu, die es wiederum in von ihr erzeugte Datenpakete einfügt. Ohne diese Maßnahme würden beispielsweise Reglereinheiten 400, die sich vor der abschließenden Reglereinheit 400 befinden, ein Problem, dass der abschließenden Reglereinheit 400 über das Sicherheitssignal SH2_IN angezeigt wird, nicht erkennen, da die Datenpakete, die den Status dieses Sicherheitssignals SH2_IN enthalten, nur in Richtung des Hauptrechners 300 weitergeleitet werden.

Besonders vorteilhaft an diesem Ausführungsbeispiel ist es, dass die Datenpakete nicht zweimal alle Reglereinheiten der Reihenschaltung passieren müssen, sondern nach dem einmaligen Durchlaufen der Reihenschaltung direkt zum Hauptrechner 300 zurückgeschickt werden. Darüber hinaus können Datenpakete aus zwei Richtungen zu den Reglereinheiten gesendet werden, wodurch eine höhere Übertragungssicherheit erreichbar ist. In anderen Worten ist eine doppelte Ringstruktur gebildet, bei der Datenpakete, die von der Datenpaket-Erzeugungseinheit 310 erzeugt wurden, nach dem einmaligen Durchlaufen der Reglereinheiten 400 der Reihenschaltung (bezogen auf die Darstellung in Figur 4 im Uhrzeigersinn) bei der zweiten abschließenden Datenpaket-Verarbeitungseinheit 620 im Hauptrechner 300 ankommen, und Datenpakete, die von der zweiten Datenpaket-Erzeugungseinheit 630 erzeugt wurden, analog dazu nach dem einmaligen Durchlaufen der Reihenschaltung (bezogen auf die Darstellung in Figur 4 gegen den Uhrzeigersinn) bei der Datenpaket-Verarbeitungseinheit 320 der abschließenden Datenpaket-Verarbeitungseinheit 320 eintreffen.

## Patentansprüche

1. Modulares numerisches Steuergerät, bestehend aus wenigstens zwei Modulen (10, 20; 300, 400), die je eine Mikroprozessoreinheit (30) enthalten und über serielle Datenübertragungskanäle (80; 480) zur Übertragung von Informationen in Form von Datenpaketen miteinander verbunden sind und die Datenpakete den Status von wenigstens einem Sicherheitssignal (SH1_IN, SH2_IN, SH1_IN', SH2_IN') enthalten, wobei
- in wenigstens einem ersten Modul (10; 300) eine Datenpaket-Erzeugungseinheit (40; 310; 630) zur Erzeugung von Datenpaketen und zur Übertragung dieser Datenpakete zu wenigstens einem weiteren Modul (20; 400) vorgesehen ist, und die Datenpaket-Erzeugungseinheit (40; 310; 630) unabhängig von der Funktion der Mikroprozessoreinheit (30) des wenigstens einen ersten Moduls (10; 300) arbeitet und
- in wenigstens einem zweiten Modul (20; 400) eine Datenpaket-Verarbeitungseinheit (60; 320, 410, 420; 620) vorgesehen ist,
**dadurch gekennzeichnet, dass**
mit der Datenpaket-Verarbeitungseinheit, unabhängig von der Funktion der Mikroprozessoreinheit (30) des wenigstens einen zweiten Moduls (20; 400), Datenpakete, die von dem wenigstens einem ersten Modul (10; 300) eintreffen, verarbeitbar und/oder zu wenigstens einem weiteren Modul (10, 20; 300, 400) übertragbar sind.

2. Modulares numerisches Steuergerät nach Anspruch 1, **dadurch gekennzeichnet, dass** der Datenpaket-Erzeugungseinheit (40; 310; 630) wenigstens ein Sicherheitssignal (SH1_IN, SH1_IN') zugeführt ist und der Status des wenigstens einen Sicherheitssignals (SH1_IN, SH1_IN') in von der Datenpaket-Erzeugungseinheit (40; 310; 630) erzeugte Datenpakete einfügbar ist.

3. Modulares numerisches Steuergerät nach einem der vorhergehenden Ansprüche, **dadurch gekennzeichnet, dass** die Erzeugung und Übertragung von Datenpaketen in determinierten Zeitabständen erfolgt.

4. Modulares numerisches Steuergerät nach einem der vorhergehenden Ansprüche, **dadurch gekennzeichnet, dass** die Datenpaket-Verarbeitungseinheit (60; 320, 410, 420; 620) in Abhängigkeit von wenigstens einem im Datenpaket enthaltenen Sicherheitssignal (SH1_IN, SH2_IN, SH1_IN', SH2_IN') wenigstens ein Abschaltsignal (SH1_OUT, SH2_OUT) ausgibt.

5. Modulares numerisches Steuergerät nach einem der vorhergehenden Ansprüche, **dadurch gekennzeichnet, dass** der Datenpaket-Verarbeitungseinheit (60; 320, 410, 420; 620) wenigstens ein Sicherheitssignal (SH2_IN, SH2_IN') zugeführt ist, dessen Status in empfangene Datenpakete einfügbar ist und die Datenpakete zu wenigstens einem weiteren Modul (10, 20; 300, 400) übertragbar sind.

6. Modulares numerisches Steuergerät nach einem der Ansprüche 1 bis 4, **dadurch gekennzeichnet, dass** das wenigstens eine erste Modul ein Hauptrechner (10) ist und das wenigstens eine zweite Modul eine Reglereinheit (20) ist, die über einen seriellen Datenübertragungskanal (80) in Form einer Reihenschaltung miteinander verbunden sind, wobei
- im Hauptrechner (10) eine Datenpaket-Erzeugungseinheit (40) angeordnet ist.
- in der wenigstens einen Reglereinheit (20) eine Datenpaket-Verarbeitungseinheit (60) vorgesehen ist.

7. Modulares numerisches Steuergerät nach einem der Ansprüche 1 bis 5, **dadurch gekennzeichnet, dass** das wenigstens eine erste Modul ein Hauptrechner (300) ist und das wenigstens eine zweite Modul eine Reglereinheit (400) ist, die über serielle Datenübertragungskanäle (480) in Form einer Reihenschaltung miteinander verbunden sind, wobei
- im Hauptrechner (300) eine Datenpaket-Erzeugungseinheit (310) angeordnet ist.
- in der wenigstens einen Reglereinheit (400) eine erste Datenpaket-Verarbeitungseinheit (410) vorgesehen ist, mit der aus Richtung des Hauptrechners (300) eintreffende Datenpakete verarbeitbar und zur nächsten Reglereinheit (400) der Reihenschaltung übertragbar sind und
- in der wenigstens einen Reglereinheit (400) weiter eine zweite Datenpaket-Verarbeitungseinheit (420) vorgesehen ist, mit der aus Richtung der abschließenden Reglereinheit (400) der Reihenschaltung eintreffende Datenpakete verarbeitbar und in Richtung des Hauptrechners (300) übertragbar sind.

8. Modulares numerisches Steuergerät nach Anspruch 7, **dadurch gekennzeichnet, dass** die seriellen Datenübertragungskanäle (480) einen Sendekanal (490) und einen Empfangskanal (500) enthalten und bei der abschließenden Reglereinheit (400) der Reihenschaltung der Sendekanal (490) mit dem Empfangskanal (500) verbunden ist und somit Datenpakete, die aus Richtung des Hauptrechners (300) bei der abschließenden Reglereinheit (400) der Reihenschaltung eintreffen, wieder in Richtung des Hauptrechners (300) übertragbar sind.

9. Modulares numerisches Steuergerät nach Anspruch 7 oder 8, **dadurch gekennzeichnet, dass** im Hauptrechner (300) weiter eine abschließende Datenpaket-Verarbeitungseinheit (320) zur Verarbeitung von Datenpaketen vorgesehen ist, die in Abhängigkeit vom in empfangenen Datenpaketen enthaltenen Status wenigstens eines Sicherheitssignals (SH2_IN) ein Abschaltsignal (SH2_OUT) schaltet.

10. Modulares numerisches Steuergerät nach Anspruch 7, **dadurch gekennzeichnet, dass**
- der Hauptrechner weiter eine zweite Datenpaket-Erzeugungseinheit (630) enthält und
- die abschließende Reglereinheit (400) der Reihenschaltung über einen seriellen Datenübertragungskanal (480) wieder mit dem Hauptrechner (300) verbunden ist und Datenpakete sowohl von der Datenpaket-Erzeugungseinheit (310) in Richtung der abschließenden Reglereinheit (400), als auch von der zweiten Datenpaket-Erzeugungseinheit (630) in entgegengesetzter Richtung der Reihenschaltung übertragbar sind.

11. Modulares numerisches Steuergerät nach Anspruch 10, **dadurch gekennzeichnet, dass** im Hauptrechner (300) weiter eine abschließende Datenpaket-Verarbeitungseinheit (320) zur Verarbeitung von Datenpaketen, die aus Richtung der abschließenden Reglereinheit (400) der Reihenschaltung eintreffen, vorgesehen ist.

12. Modulares numerisches Steuergerät nach Anspruch 10 oder 11, **dadurch gekennzeichnet, dass** im Hauptrechner (300) weiter eine zweite abschließende Datenpaket-Verarbeitungseinheit (620) zur Verarbeitung von Datenpaketen, die aus Richtung der ersten Reglereinheit (400) der Reihenschaltung eintreffen, vorgesehen ist.

13. Modulares numerisches Steuergerät nach Anspruch 12, **dadurch gekennzeichnet, dass** die zweite abschließende Datenpaket-Verarbeitungseinheit (620) in Abhängigkeit vom in empfangenen Datenpaketen enthaltenen Status wenigstens eines Sicherheitssignals (SH2_IN) ein Abschaltsignal (SH2_OUT) schaltet.

14. Modulares numerisches Steuergerät nach einem der Ansprüche 7 bis 13, **dadurch gekennzeichnet, dass** sich im Hauptrechner (300) eine Hauptrechner-Überwachungseinheit (350) befindet, die an die Datenpaket-Erzeugungseinheit (310) ein erstes internes Sicherheitssignal (SH1_IN') ausgibt, dessen Status sich bei Überschreiten einer definierten Zeitdauer ändert und die Messung der definierten Zeitdauer in der Hauptrechner-Überwachungseinheit (350) von der Mikroprozessoreinheit (30) über eine Triggerleitung (360) rücksetzbar ist.

15. Modulares numerisches Steuergerät nach einem der Ansprüche 7 bis 14. **dadurch gekennzeichnet, dass** sich in der wenigstens einen Reglereinheit (400) eine Regler-Überwachungseinheit (520) befindet, die an die erste Datenpaket-Verarbeitungseinheit (410) ein zweites internes Sicherheitssignal (SH2_IN') ausgibt, dessen Status sich bei Überschreiten einer definierten Zeitdauer ändert und die Messung der definierten Zeitdauer in der Regler-Überwachungseinheit (520) von der Mikroprozessoreinheit (30) über eine Triggerleitung (530) rücksetzbar ist.

## Claims

1. Modular numerical control device comprising at least two modules (10, 20; 300, 400) which each contain a microprocessor unit (30) and are connected to one another via serial data transmission channels (80; 480) for transmitting information in the form of data packets, and the data packets contain the status of at least one safety signal (SH1_IN, SH2_IN, SH1_IN', SH2_IN'), wherein
- a data packet generating unit (40; 310; 630) for generating data packets and for transmitting these data packets to at least one further module (20; 400) is provided in at least one first module (10; 300), and the data packet generating unit (40; 310; 630) operates independently of the function of the microprocessor unit (30) in the at least one first module (10; 300), and
- a data packet processing unit (60; 320, 410, 420; 620) is provided in at least one second module (20; 400),
**characterized in that**
data packets which arrive from the at least one first module (10; 300) can be processed and/or can be transmitted to at least one further module (10, 20; 300, 400) using the data packet processing unit independently of the function of the microprocessor unit (30) in the at least one second module (20; 400) .

2. Modular numerical control device according to Claim 1, **characterized in that** at least one safety signal (SH1_IN, SH1_IN') is supplied to the data packet generating unit (40; 310; 630), and the status of the at least one safety signal (SR1_IN, SH1_IN') can be inserted into data packets generated by the data packet generating unit (40; 310; 630).

3. Modular numerical control device according to one of the preceding claims, **characterized in that** data packets are generated and transmitted at determined intervals of time.

4. Modular numerical control device according to one of the preceding claims, **characterized in that** the data packet processing unit (60; 320, 410, 420; 620) outputs at least one switch-off signal (SH1_OUT, SH2_OUT) on the basis of at least one safety signal (SH1_IN, SH2_IN, SH1_IN', SH2_IN') contained in the data packet.

5. Modular numerical control device according to one of the preceding claims, **characterized in that** at least one safety signal (SH2_IN, SH2_IN'), the status of which can be inserted into received data packets, is supplied to the data packet processing unit (60; 320, 410, 420; 620), and the data packets can be transmitted to at least one further module (10, 20; 300, 400).

6. Modular numerical control device according to one of Claims 1 to 4, **characterized in that** the at least one first module is a main computer (10) and the at least one second module is a controller unit (20) which are connected to one another in the form of a series circuit via a serial data transmission channel (80), wherein
- a data packet generating unit (40) is arranged in the main computer (10).
- a data packet processing unit (60) is provided in the at least one controller unit (20).

7. Modular numerical control device according to one of Claims 1 to 5, **characterized in that** the at least one first module is a main computer (300) and the at least one second module is a controller unit (400) which are connected to one another in the form of a series circuit via serial data transmission channels (480), wherein
- a data packet generating unit (310) is arranged in the main computer (300),
- a first data packet processing unit (410) is provided in the at least one controller unit (400) and can be used to process data packets arriving from the direction of the main computer (300) and to transmit them to the next controller unit (400) in the series circuit, and
- a second data packet processing unit (420) is also provided in the at least one controller unit (400) and can be used to process data packets arriving from the direction of the final controller unit (400) in the series circuit and to transmit them in the direction of the main computer (300).

8. Modular numerical control device according to Claim 7, **characterized in that** the serial data transmission channels (480) contain a transmission channel (490) and a reception channel (500), and the transmission channel (490) is connected to the reception channel (500) in the final controller unit (400) in the series circuit, and data packets arriving at the final controller unit (400) in the series circuit from the direction of the main computer (300) can therefore be transmitted in the direction of the main computer (300) again.

9. Modular numerical control device according to Claim 7 or 8, **characterized in that** a final data packet processing unit (320) for processing data packets is also provided in the main computer (300) and switches a switch-off signal (SH2_OUT) on the basis of the status of at least one safety signal (SH2_IN) contained in received data packets.

10. Modular numerical control device according to Claim 7. **characterized in that**
- the main computer also contains a second data packet generating unit (630), and
- the final controller unit (400) in the series circuit is again connected to the main computer (300) via a serial data transmission channel (480), and data packets can be transmitted both from the data packet generating unit (310) in the direction of the final controller unit (400) and from the second data packet generating unit (630) in the opposite direction of the series circuit.

11. Modular numerical control device according to Claim 10, **characterized in that** a final data packet processing unit (320) for processing data packets arriving from the direction of the final controller unit (400) in the series circuit is also provided in the main computer (300).

12. Modular numerical control device according to Claim 10 or 11, **characterized in that** a second final data packet processing unit (620) for processing data packets arriving from the direction of the first controller unit (400) in the series circuit is also provided in the main computer (300).

13. Modular numerical control device according to Claim 12, **characterized in that** the second final data packet processing unit (620) switches a switch-off signal (SH2_OUT) on the basis of the status of at least one safety signal (SH2_IN) contained in received data packets.

14. Modular numerical control device according to one of Claims 7 to 13, **characterized in that** the main computer (300) contains a main computer monitoring unit (350) which outputs, to the data packet generating unit (310), a first internal safety signal (SH1_IN'), the status of which changes when a defined period is exceeded, and the measurement of the defined period can be reset in the main computer monitoring unit (350) by the microprocessor unit (30) via a trigger line (360).

15. Modular numerical control device according to one of Claims 7 to 14, **characterized in that** the at least one controller unit (400) contains a controller monitoring unit (520) which outputs, to the first data packet processing unit (410), a second internal safety signal (SH2_IN'), the status of which changes when a defined period is exceeded, and the measurement of the defined period in the controller monitoring unit (520) can be reset by the microprocessor unit (30) via a trigger line (530).

## Revendications

1. Appareil de contrôle numérique modulaire, composé d'au moins deux modules (10, 20 ; 300, 400) qui contiennent chacun une unité de microprocesseur (30) et sont connectés entre eux par des canaux sériels de transmission de données (80 ; 480) pour la transmission d'informations sous forme de paquets de données et les paquets de données contiennent l'état d'au moins un signal de sécurité (SH1_IN. SH2_IN, SH1_IN', SH2_IN'), dans lequel
- il est prévu, dans au moins un premier module (10 ; 300), une unité de création de paquets de données (40 ; 310 ; 630) pour créer des paquets de données et pour transférer ces paquets de données à au moins un autre module (20 ; 400), et l'unité de création de paquets de données (40 ; 310 ; 630) fonctionne indépendamment du fonctionnement de l'unité de microprocesseur (30) de l'au moins un premier module (10 ; 300) et
- une unité de traitement de paquets de données (60 ; 320, 410, 420 ; 620) est prévue dans au moins un second module (20 ; 400),
**caractérisé en ce que**,
au moyen de l'unité de traitement de paquets de données (30), indépendamment du fonctionnement de l'unité de microprocesseur (30) de l'au moins un second module (20 ; 400), des paquets de données qui arrivent en provenance de l'au moins un premier module (10 ; 300) peuvent être traités et/ou transférés à au moins un autre module (10, 20 ; 300, 400).

2. Appareil de contrôle numérique modulaire selon la revendication 1, **caractérisé en ce qu'**au moins un signal de sécurité (SH1_IN, SH1_IN') est acheminé à l'unité de création de paquets de données (40 ; 310 ; 630) et que l'état de l'au moins un signal de sécurité (SH1_IN, SH1_IN') est insérable dans des paquets de données créés par l'unité de création de paquets de données (40 ; 310 ; 630).

3. Appareil de contrôle numérique modulaire selon une des revendications précédentes, **caractérisé en ce que** la création et la transmission de paquets de données ont lieu à des intervalles de temps déterminés.

4. Appareil de contrôle numérique modulaire selon une des revendications précédentes, **caractérisé en ce que** l'unité de traitement de paquets de données (60 ; 320, 410, 420 ; 620), en fonction d'au moins un signal de sécurité (SH1_IN, SH2_IN, SH1_IN', SH2_IN') contenu dans le paquet de données, émet au moins un signal de coupure (SH1_OUT, SH2_OUT).

5. Appareil de contrôle numérique modulaire selon une des revendications précédentes, **caractérisé en ce qu'**est acheminé à l'unité de traitement de paquets de données (60 ; 320, 410, 420 ; 620) au moins un signal de sécurité (SH2_IN, SH2_*IN*') dont l'état est insérable dans les paquets de données reçus, et les paquets de données peuvent être transmis à au moins un autre module (10, 20 ; 300, 400).

6. Appareil de contrôle numérique modulaire selon une des revendications 1 à 4, **caractérisé en ce que** l'au moins un premier module est un calculateur principal (10) et l'au moins un second module est une unité de réglage (20) qui sont reliés entre eux par un canal sériel de transmission de données (80) sous la forme d'un circuit en série, dans lequel,
- dans le calculateur principal (10), une unité de création de paquets de données (40) est disposée,
- dans l'au moins une unité de réglage (20) une unité de traitement de paquets de données (60) est prévue.

7. Appareil de contrôle numérique modulaire selon une des revendications 1 à 5, **caractérisé en ce que** l'au moins un premier module est un calculateur principal (300) et l'au moins un second module est une unité de réglage (400) qui sont reliés entre eux par des canaux sériels de transmission de données (480) sous la forme d'un circuit en série, dans lequel,
- dans le calculateur principal (300), une unité de création de paquets de données (310) est disposée,
- dans l'au moins une unité de réglage (400), une première unité de traitement de paquets de données (410) est prévue grâce à laquelle des paquets de données arrivant en provenance du calculateur principal (300) peuvent être traités et sont transmissibles vers l'unité de réglage suivante (400) du circuit en série et
- dans l'au moins une unité de réglage (400), il est en outre prévu une seconde unité de traitement de paquets de données (420) grâce à laquelle des paquets de données arrivant en provenance de l'unité de réglage finale (400) du circuit en série peuvent être traités et sont transmissibles en direction du calculateur principal (300).

8. Appareil de contrôle numérique modulaire selon la revendication 7, **caractérisé en ce que** les canaux sériels de transmission de données (480) contiennent un canal d'émission (490) et un canal de réception (500) et au niveau de l'unité de réglage finale (400) du circuit en série, le canal d'émission (490) est connecté au canal de réception (500) et ainsi des paquets de données qui arrivent en provenance du calculateur principal (300) au niveau de l'unité de réglage finale (400) du circuit en série sont de nouveau transmissibles en direction du calculateur principal (300).

9. Appareil de contrôle numérique modulaire selon la revendication 7 ou 8, **caractérisé en ce qu'**il est en outre prévu, dans le calculateur principal (300), une unité finale de traitement de paquets de données (320) pour le traitement de paquets de données qui, en fonction de l'état contenu dans des paquets de données reçus d'au moins un signal de sécurité (SH2_IN), met en circuit un signal de coupure (SH2_OUT).

10. Appareil de contrôle numérique modulaire selon la revendication 7, **caractérisé en ce que**
- le calculateur principal contient en outre une seconde unité de création de paquets de données (630) et
- l'unité de réglage finale (400) du circuit en série est reconnectée par un canal sériel de transmission de données (480) avec le calculateur principal (300) et des paquets de données sont transmissibles aussi bien par l'unité de création de paquets de données (310) en direction de l'unité de réglage final (400) que par la seconde unité de création de paquets de données (630) dans le sens opposé du circuit en série.

11. Appareil de contrôle numérique modulaire selon la revendication 10, **caractérisé en ce qu'**il est en outre prévu dans le calculateur principal (300) une unité finale de traitement de paquets de données (320) pour le traitement de paquets de données qui arrivent en provenance de l'unité de réglage finale (400) du circuit en série.

12. Appareil de contrôle numérique modulaire selon la revendication 10 ou 11, **caractérisé en ce que**, dans le calculateur principal (300), il est prévu en outre une seconde unité finale de traitement de paquets de données (620) pour le traitement de paquets de données qui arrivent en provenance de la première unité de réglage (400) du circuit en série.

13. Appareil de contrôle numérique modulaire selon la revendication 12, **caractérisé en ce que** la seconde unité finale de traitement de paquets de données (620), en fonction de l'état contenu dans des paquets de données reçus d'au moins un signal de sécurité (SH2_IN), met en circuit un signal de coupure (SH2_OUT).

14. Appareil de contrôle numérique modulaire selon une des revendications 7 à 13, **caractérisé en ce qu'**il y a dans le calculateur principal (300) une unité de surveillance de calculateur principal (350) qui émet à destination de l'unité de création de paquets de données (310) un premier signal de sécurité interne (SH1_IN') dont l'état change en cas de dépassement d'un laps de temps défini et la mesure du laps de temps défini peut être réinitialisée dans l'unité de surveillance de calculateur principal (350) par l'unité de microprocesseur (30) via un câble de déclenchement (360).

15. Appareil de contrôle numérique modulaire selon une des revendications 7 à 14, **caractérisé en ce qu'**il y a dans l'au moins une unité de réglage (400) une unité de surveillance de régleur (520) qui émet à destination de la première unité de traitement de paquets de données (410) un second signal de sécurité interne (SH2_IN') dont l'état change en cas de dépassement d'un laps de temps défini et la mesure du laps de temps défini peut être réinitialisée dans l'unité de surveillance de régleur (520) par l'unité de microprocesseur (30) via un câble de déclenchement (530).
